# EUROPEAN PATENT SPECIFICATION

(11) **EP 3 730 315 B1**
(45) Date of publication and mention of the grant of the patent: **10.08.2022**
(21) Application number: 20170779.1
(22) Date of filing: 22.04.2020
(51) Int. Cl.: B60C 11/03, B60C 11/12

(54) **PNEUMATIC TIRE**
LUFTREIFEN
PNEUMATIQUE GONFLABLE

(30) Priority: 23.04.2019 JP 2019081966
(43) Date of publication of application: 28.10.2020
(73) Proprietor: The Yokohama Rubber Co., Ltd., Tokyo 105-8685 (JP)
(72) Inventor: Ishizaka, Takahide, Kanagawa 254-8601 (JP)
(74) Representative: Dilg, Haeusler, Schindelmann Patentanwaltsgesellschaft mbH

(56) References cited:
- EP-A1- 2 223 812
- EP-A2- 2 777 950
- WO-A1-2008/152914
- WO-A1-2018/225425
- JP-A- 2006 111 091

## Description

### Technical Field

The invention relates to a pneumatic tire and particularly to a pneumatic tire that can improve performance on snow while maintaining wear resistance.

### Background Art

There is a demand for the performance on snow to be improved in known heavy duty tires. Technology for a known pneumatic tire that addresses this issue is described in JP 2008 307935 A.

EP 2 223 812 A1 discloses a pneumatic tire with improved steering stability on a wet road surface. The tire comprises shoulder main grooves, center main grooves, a pair of shoulder land portions, a pair of middle land portions, one or more rows of center land portions, middle lug grooves extending in a tire lateral direction and defining middle blocks, the middle blocks having narrow shallow grooves defining a pair of small blocks.

JP 2006 111091 A discloses a similar pneumatic tire. Additionally, the middle blocks of the tire disclosed in the document have zigzag-shaped edge portions extending along the middle lug grooves.

EP 2 777 950 A2 discloses a tire comprising a tread pattern with a designated rotational direction. The document shows that, in order to improve the performance of a tire, it is known to consider and optimize a groove or land area ratio.

WO 2018/225425 A1 discloses a tire configured so that it is prevented from wearing unevenly whilst ensuring on-ice/on-snow performance. The tire comprises shoulder main grooves, center main grooves, a pair of shoulder land portions, a pair of middle land portions, one or more rows of center land portions, middle lug grooves extending in a tire lateral direction and defining middle blocks. The middle blocks in the middle land portions comprise closed sipes.

### Summary of Invention

### Technical Problem

Additionally, in recent years, a predetermined performance on snow is also demanded in all-season tires mounted on a trailer. Moreover, there is a problem in that wear resistance should be ensured for heavy duty tires.

In light of the foregoing, an object of the present invention is to provide a pneumatic tire that can improve performance on snow while maintaining wear resistance.

### Solution to Problem

To achieve the object described above, a pneumatic tire according to the present invention includes: a pair of shoulder main grooves and two or more center main grooves; and a pair of shoulder land portions, a pair of middle land portions, and one or more rows of center land portions, which are defined by the main grooves. A groove area ratio Sc of a tread portion center region is in a range of 0.40 ≤ Sc ≤ 0.50, the middle land portion includes a plurality of middle lug grooves extending in a tire lateral direction and passing through the middle land portion, and a plurality of middle blocks defined by the middle lug grooves. The middle block has a narrow shallow groove extending in the tire lateral direction and passing through the middle block, and a pair of small blocks defined by the narrow shallow groove. The middle block has a zigzag-shaped edge portion extending along the middle lug groove, a pitch length Pe of the zigzag shape and a width length We of the edge portion have a relationship of 0.13 ≤ Pe/We ≤ 0.33, and an amplitude Ae of the zigzag shape is in a range of 1.0 mm ≤ Ae ≤ 4.0 mm.

### Advantageous Effects of Invention

In the pneumatic tire according to the present invention, since (1) the groove area ratio Sc of the tread portion center region is set to be within the range described above, and the middle block has the narrow shallow groove that is opened when the tire contacts the ground in place of a through sipe, the edge component of the tread portion center region is ensured. For this reason, as compared to the configuration in which the block has only the sipe, the performance on snow is advantageously improved. Additionally, since (2) the middle block has the narrow shallow groove, as compared to the configuration in which the block has a wide or deep through groove, wear resistance of the tire is advantageously ensured. In the pneumatic tire, the middle block has a zigzag-shaped edge portion that extends along the middle lug groove, the pitch length Pe of the zigzag shape and the width length We of the edge portion have a relationship of 0.13 ≤ Pe/We ≤ 0.33, and the amplitude Ae of the zigzag shape is in a range of 1.0 mm ≤ Ae ≤ 4.0 mm. This advantageously increases the edge component of the middle blocks, thus improving the performance on snow of the tire.

### Brief Description of Drawings

FIG. 1 is a cross-sectional view in a tire meridian direction illustrating a pneumatic tire according to an embodiment of the invention.
FIG. 2 is a plan view illustrating a tread surface of the pneumatic tire illustrated in FIG. 1.
FIG. 3 is an enlarged view illustrating a half region of the tread surface illustrated in FIG. 2.
FIG. 4 is a plan view illustrating a single block illustrated in FIG. 3.
FIG. 5 is a cross-sectional view illustrating the single block illustrated in FIG. 3.
FIG. 6 is a table showing the results of performance tests of pneumatic tires according to embodiments of the invention.

### Description of Embodiments

Embodiments of the invention are described in detail below with reference to the drawings. However, the invention is not limited to these embodiments. Moreover, constituents of the embodiments include elements that are substitutable while maintaining consistency with the invention, and obviously substitutable elements. Furthermore, the modified examples described in the embodiments can be combined as desired within the scope apparent to one skilled in the art.

### Pneumatic Tire

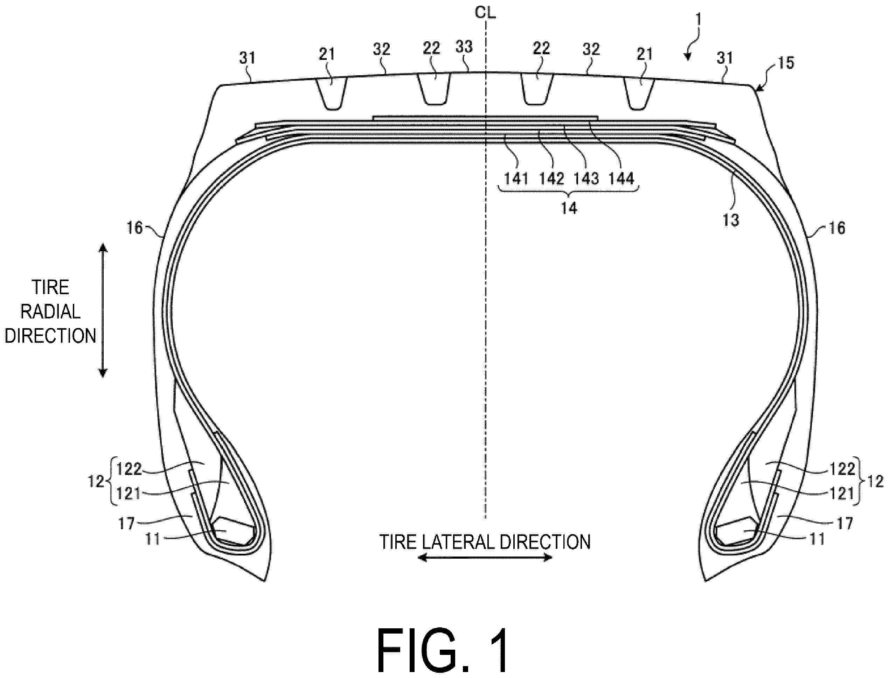

FIG. 1 is a cross-sectional view in a tire meridian direction illustrating a pneumatic tire according to an embodiment of the invention. The same drawing illustrates a cross-sectional view of a half region in the tire radial direction. The same drawing illustrates a heavy duty radial tire mounted on a trailer as an example of a pneumatic tire.

In the same drawing, "cross section in a tire meridian direction" refers to a cross section of the tire taken along a plane that includes the tire rotation axis (not illustrated). A tire equatorial plane CL is defined as a plane perpendicular to the tire rotation axis through the midpoint of the measuring point of the tire cross-sectional width defined by JATMA. "Tire lateral direction" refers to the direction parallel with the tire rotation axis, and "tire radial direction" refers to the direction perpendicular to the tire rotation axis.

The pneumatic tire 1 has an annular structure with the tire rotation axis as its center and includes a pair of bead cores 11, 11, a pair of bead fillers 12, 12, a carcass layer 13, a belt layer 14, a tread rubber 15, a pair of sidewall rubbers 16, 16, and a pair of rim cushion rubbers 17, 17 (see FIG. 1).

The pair of bead cores 11, 11 are formed by winding one or a plurality of bead wires made of steel in a ring and multiple-winding manner, and are embedded in bead portions to constitute cores of the left and right bead portions. The pair of bead fillers 12, 12 are each formed from a lower filler 121 and an upper filler 122. The pair of bead fillers 12, 12 are disposed outward of the pair of bead cores 11, 11 in the tire radial direction and reinforce the bead portions.

The carcass layer 13 has a single layer structure made of one carcass ply or a multilayer structure made of a plurality of carcass plies, and extends between the left and right bead cores 11, 11 in a toroidal shape, forming the framework of the tire. Additionally, both end portions of the carcass layer 13 are turned back outwardly in the tire lateral direction so as to wrap around the bead cores 11 and the bead fillers 12 and fixed. The carcass ply (plies) of the carcass layer 13 is made by performing a rolling process on coating rubber-covered carcass cords made of steel. The carcass ply (plies) has a cord angle (defined as the inclination angle of the longitudinal direction of the carcass cords with respect to a tire circumferential direction), as an absolute value, ranging from 80 degrees to 90 degrees.

The belt layer 14 is a multilayer structure including a plurality of belt plies 141 to 144, and is disposed by being wound around the outer circumference of the carcass layer 13. These belt plies 141 to 144 include a large-angle belt 141, a pair of cross belts 142, 143, and a belt cover 144. The large-angle belt 141 is made by performing a rolling process on coating rubber-covered belt cords made of steel. The large-angle belt 141 has a cord angle (inclination angle of the longitudinal direction of the belt cords with respect to the tire circumferential direction), as an absolute value, ranging from 45 degrees to 70 degrees. The pair of cross belts 142, 143 are made by performing a rolling process on coating rubber-covered belt cords made of steel. The cross belts 141, 142 have a cord angle, as an absolute value, ranging from 10 degrees to 55 degrees. Additionally, the pair of cross belts 142, 143 have cord angles of opposite signs to each other, and are layered so that the longitudinal directions of the belt cords intersect each other (crossply structure). The belt cover 144 is made by performing a rolling process on coating rubber-covered belt cover cords made of steel or an organic fiber material. The belt cover 144 has a cord angle, as an absolute value, ranging from 10 degrees to 55 degrees.

The tread rubber 15 is disposed outward of the carcass layer 13 and the belt layer 14 in the tire radial direction and constitutes a tread portion. The pair of sidewall rubbers 16, 16 are disposed outward of the carcass layer 13 in the tire lateral direction and constitute left and right sidewall portions. The pair of rim cushion rubbers 17, 17 are disposed inward of the left and right bead cores 11, 11 and the turned back portions of the carcass layer 13 in the tire radial direction to constitute rim fitting surfaces of the bead portions.

### Tread Pattern

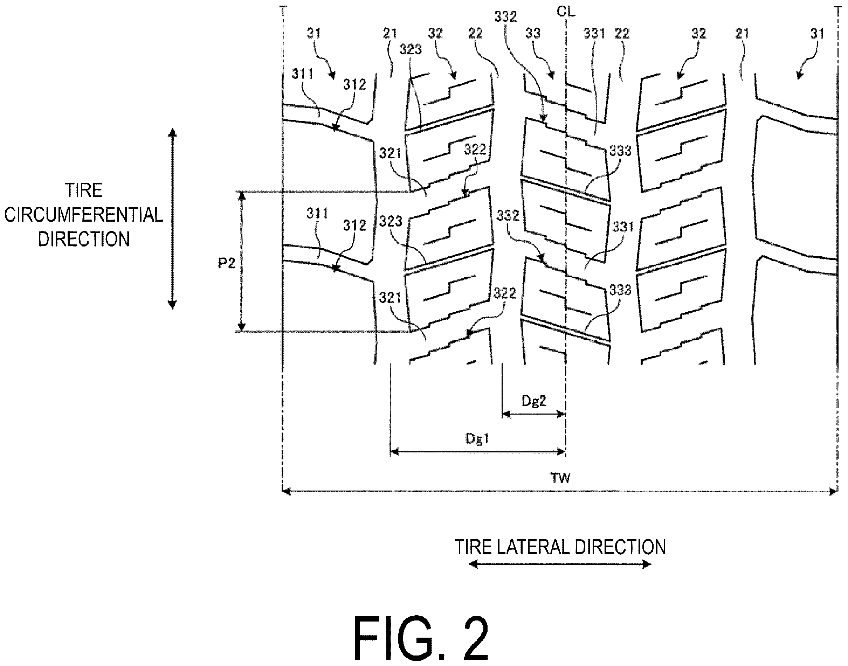

FIG. 2 is a plan view illustrating a tread surface of the pneumatic tire illustrated in FIG. 1. The same drawing illustrates the tread surface of an all-season tire having a Mud and Snow mark "M + S". In reference to the same drawing, "tire circumferential direction" refers to the direction revolving about the tire rotation axis. A sign T denotes a tire ground contact edge, and a dimension sign TW denotes a tire ground contact width.

As illustrated in FIG. 2, the pneumatic tire 1 is provided with, in the tread surface, four or more circumferential main grooves 21, 22 extending in the tire circumferential direction, a plurality of land portions 31 to 33 defined by the circumferential main grooves 21, 22.

"Main groove" refers to a groove on which a wear indicator must be provided as specified by JATMA and has a groove width of 5.0 mm or greater and a groove depth of 10 mm or greater.

The groove width is a distance between the opposing groove walls at a groove opening portion and is measured when the tire is mounted on a specified rim, inflated to the specified internal pressure, and in an unloaded state. In configurations in which the groove opening portion has a notch portion or a chamfered portion, the groove width is measured with reference to the intersection points where an extension line of the tread contact surface and extension lines of the groove walls meet, in a cross-sectional view parallel to the groove width direction and the groove depth direction.

The groove depth is a distance from the tread contact surface to the maximum groove depth and is measured when the tire is mounted on the specified rim, inflated to the specified internal pressure, and in the unloaded state. Additionally, in a configuration in which the groove include an uneven portions or sipes on the bottom, the groove depth is measured excluding these portions.

"Specified rim" refers to a "Standard Rim" defined by the Japan Automobile Tyre Manufacturers Association Inc. (JATMA), a "Design Rim" defined by the Tire and Rim Association, Inc. (TRA), or a "Measuring Rim" defined by the European Tyre and Rim Technical Organization (ETRTO). Additionally, "specified internal pressure" refers to a "maximum air pressure" defined by JATMA, to the maximum value in "TIRE LOAD LIMITS AT VARIOUS COLD INFLATION PRESSURES" defined by TRA, and to "INFLATION PRESSURES" defined by ETRTO. Additionally, "specified load" refers to a "maximum load capacity" defined by JATMA, the maximum value in "TIRE LOAD LIMITS AT VARIOUS COLD INFLATION PRESSURES" defined by TRA, or "LOAD CAPACITY" defined by ETRTO. However, in the JATMA, for a passenger vehicle tire, the specified internal pressure is an air pressure of 180 kPa, and the specified load is 88% of the maximum load capacity at the specified internal pressure.

Furthermore, in the configuration of FIG. 2, the left and right regions demarcated by the tire equatorial plane CL each have two circumferential main grooves 21, 22. For example, these circumferential main grooves 21, 22 are disposed to be point symmetric with respect to the tire equatorial plane CL. The five rows of land portions 31 to 33 are defined by these circumferential main grooves 21, 22. In addition, one land portion 33 is disposed on the tire equatorial plane CL.

However, no such limitation is intended, and five or more circumferential main grooves may be disposed, or the circumferential main grooves may be arranged asymmetrically with respect to the tire equatorial plane CL (not illustrated). In addition, the land portion may be arranged at a position off from the tire equatorial plane CL, with one circumferential main groove being arranged on the tire equatorial plane CL (not illustrated).

Additionally, of the circumferential main grooves 21, 22 disposed in one region demarcated by the tire equatorial plane CL, the circumferential main grooves 21, 21 on the outermost side in the tire lateral direction are defined as shoulder main grooves, and the other circumferential main groove 22 is defined as a center main groove.

For example, in the configuration of FIG. 2, a distance Dg1 from the tire equatorial plane CL to the groove center line of the left and right shoulder main grooves 21, 21 is in a range of not less than 26% and not greater than 32% of a tire ground contact width TW. A distance Dg2 from the tire equatorial plane CL to the groove center line of the left and right center main grooves 22, 22 is in a range of not less than 8% and not greater than 12% of the tire ground contact width TW.

The groove center line is defined as a virtual line connecting midpoints in distance between left and right groove walls. In a case where the groove center line of the main groove has a zigzag shape or a wave-like shape, the distance to the groove center line is defined with reference to a straight line parallel to the tire circumferential direction through the midpoint of the left and right of the groove center line at the maximum amplitude position, as a measurement point.

The tire ground contact width TW is measured as the maximum linear distance in the tire axial direction of a contact surface between the tire and a flat plate when the tire is mounted on a specified rim, inflated to the specified internal pressure, placed perpendicular to the flat plate in a static state, and loaded with a load corresponding to the specified load.

The tire ground contact edge T is defined as the maximum width position in the tire axial direction of the contact surface between the tire and a flat plate when the tire is mounted on a specified rim, inflated to the specified internal pressure, placed perpendicular to the flat plate in a static state, and loaded with a load corresponding to the specified load.

A region on the tire equatorial plane CL side with the left and right shoulder main grooves 21, 21 as the boundaries is defined as a center region, and left and right regions on the tire ground contact edges T side are defined as shoulder regions.

Moreover, the land portions 31, 31 located outward in the tire lateral direction that are defined by the shoulder main grooves 21, 21 are defined as shoulder land portions. The shoulder land portions 31 are the outermost land portions in the tire lateral direction and are located on the tire ground contact edges T. Furthermore, the land portions 32, 32 located inward in the tire lateral direction defined by the shoulder main grooves 21, 21 are defined as middle land portions. The middle land portion 32, 32 are adjacent to the respective shoulder land portions 31 across the shoulder main groove 21. Furthermore, the land portion 33 located closer to the tire equatorial plane CL than the middle land portion 32 is defined as a center land portion. The center land portion 33 may be disposed on the tire equatorial plane CL (see FIG. 2) or may be arranged at a position off from the tire equatorial plane CL (not illustrated).

Note that in a configuration including the four circumferential main grooves 21, 22 as illustrated in FIG. 2, the pair of shoulder land portions 31, 31, the pair of middle land portions 32, 32, and the single center land portion 33 are defined. For example, in a configuration including five or more circumferential main grooves, two or more rows of center land portions are defined (not illustrated).

For example, in the configuration of FIG. 2, all of the circumferential main grooves 21, 22 have a zigzag shape with an amplitude in the tire lateral direction. Additionally, the adjacent circumferential main grooves 21, 22; 22, 22; 22,21 are disposed so as to shift the phase of the zigzag shape. However, no such limitation is intended, and some or all of the circumferential main grooves 21, 22 may have a straight shape (not illustrated).

In the configuration illustrated in FIG. 2, a groove area ratio Sa of the tire ground contact region is in a range of 0.25 ≤ Sa ≤ 0.40. Additionally, a groove area ratio Ss of the tread portion shoulder region is in a range of 0.05 ≤ Ss ≤ 0.15, and a groove area ratio Sc of the tread portion center region is in a range of 0.40 ≤ Sc ≤ 0.50. Additionally, the groove area ratio Sc of the tread portion center region and the groove area ratio Ss of the tread portion shoulder region have a relationship of 3.0 ≤ Sc/Ss. Accordingly, the groove area ratio Sc of the tread portion center region is set to be relatively large. This improves performance on snow of the tire.

The groove area ratio is defined as the ratio of the groove area of a predetermined region to an area of the predetermined region. The groove area is an opening area of the grooves in the tread contact surface, and is measured at a contact surface between a tire and a flat plate when the tire is mounted on a specified rim, inflated to the specified internal pressure, placed vertically on the flat plate in a static state, and loaded with a load corresponding to the specified load. The groove refers to a groove that opens when the tire contacts the ground and contributes to drainage, and does not include sipes, kerfs, and the like that are closed when the tire contacts the ground.

The tread portion shoulder region is defined as a region from the tire ground contact edge T to the groove center line of the shoulder main groove 21. The tread portion center region is defined as a region between the groove center lines of the left and right shoulder main grooves 21, 21.

### Shoulder land portion

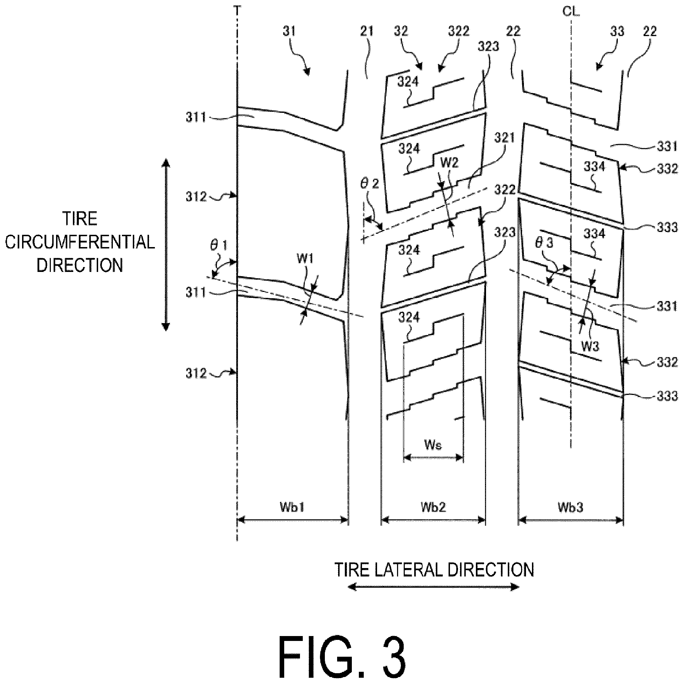

FIG. 3 is an enlarged view illustrating a half region of the tread surface illustrated in FIG. 2. Since the configuration of FIG. 2 has a point symmetric tread pattern centered on the point on the tire equatorial plane CL, the description of the other half region is omitted.

In FIG. 3, the shoulder land portion 31 includes a plurality of shoulder lug grooves 311 and a plurality of shoulder blocks 312.

The shoulder lug grooves 311 extend in the tire lateral direction and pass through the shoulder land portions 31 and open to the tire ground contact edge T and the shoulder main groove 21. Additionally, the plurality of the shoulder lug grooves 311 are disposed at a predetermined interval in the tire circumferential direction. The shoulder lug grooves 311 have a groove width W1 in a range 8.0 mm ≤ W1 ≤ 20.0 mm. Additionally, an inclination angle θ1 of the shoulder lug groove 311 with respect to the tire circumferential direction is in a range of 60 degrees ≤ θ1 ≤ 85 degrees.

The inclination angle of the lug groove is measured as an angle between a virtual straight line passing left and right openings of the lug groove and the tire circumferential direction.

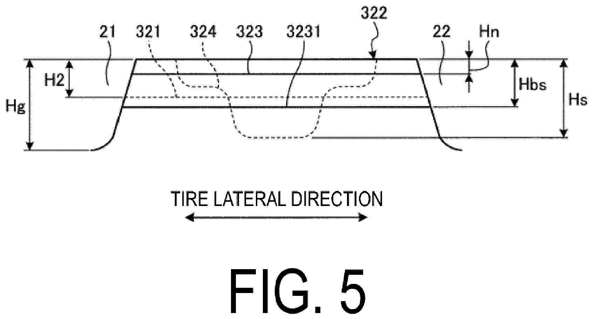

Additionally, a groove depth H1 (not illustrated) of the shoulder lug groove 311 and a groove depth Hg of the shoulder main groove 21 (see FIG. 5 to be described later) preferably have a relationship of 0.15 ≤ H1/Hg ≤ 0.35, and more preferably have a relationship of 0.20 ≤ H1/Hg ≤ 0.30. With such a configuration, since the shoulder lug grooves 311 are shallow grooves, the performance on snow of the tire is increased during early stages of wear, and the wear resistance performance of the tire after the intermediate stage of wear is ensured.

The shoulder blocks 312 are defined by adjacent shoulder lug grooves 311, 311. A maximum width Wb1 of the shoulder block 312 and the tire ground contact width TW have a relationship of 0.13 ≤ Wb1/TW ≤ 0.23.

For example, in the configuration of FIG. 3, as described above, the shoulder main grooves 21 have a zigzag shape with an amplitude in the tire lateral direction. Additionally, the shoulder lug grooves 311 have a gently curved shape and open to the maximum amplitude position of the zigzag shape of the shoulder main groove 21. Additionally, the shoulder block 312 has an edge portion that protrudes toward the shoulder main groove 21 side. Additionally, the shoulder block 312 has a planar contact surface having no narrow grooves, sipes, or kerfs and has a continuous edge portion. Thus, the rigidity of the shoulder blocks 312 can be increased.

### Middle Land Portion and Center Land Portion

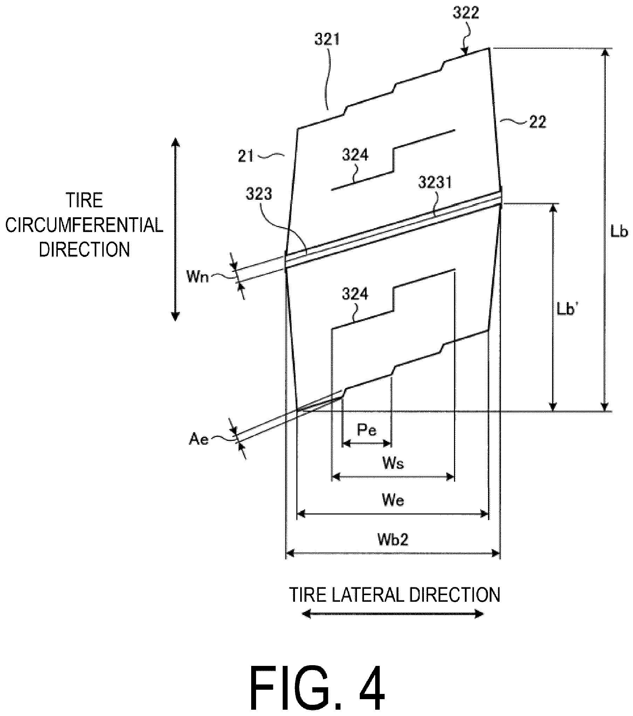

FIG. 4 and FIG. 5 are a plan view (FIG. 4) and a cross-sectional view (FIG. 5) illustrating a single block illustrated in FIG. 3. In these drawings, FIG. 5 is a cross-sectional view of the middle block 322 cut in the tire lateral direction.

In FIG. 3, the middle land portion 32 includes a plurality of middle lug grooves 321, a plurality of middle blocks 322, and narrow shallow grooves 323. Similarly, the center land portion 33 includes a plurality of center lug grooves 331, a plurality of center blocks 332, and a plurality of narrow shallow grooves 333.

In the configuration of FIG. 3, since the center land portion 33 and the middle land portion 32 are symmetric and have the same internal structure, the configuration of the middle land portion 32 is described in detail as an example, and description of the configuration of the center land portion 33 will be omitted.

The middle lug grooves 321 extend in the tire lateral direction and pass through the middle land portion 32 and open to the left and right circumferential main grooves 21, 22 partitioning the middle land portion 32. Additionally, the plurality of the middle lug grooves 321 are disposed at a predetermined interval in the tire circumferential direction. Additionally, a groove width W2 of the middle lug groove 321 is in a range of 8.0 mm ≤ W2 ≤ 20.0 mm. The groove width W2 of the middle lug groove 321 and a pitch length P2 of the middle lug grooves 321 (see FIG. 2) have a relationship of 0.13 ≤ W2/P2 ≤ 0.23. Additionally, the groove width W1 of the shoulder lug groove 311 is smaller than the groove width W2 of the middle lug groove 321. Thus, the pass-by noise performance of the tire is improved.

Additionally, an inclination angle θ2 of the middle lug groove 321 with respect to the tire circumferential direction is in a range of 60 degrees ≤ θ2 ≤ 85 degrees. Additionally, the middle lug groove 321 and the shoulder lug grooves 311 are inclined in opposite directions. In addition, opening portions of the shoulder lug grooves 311 and the middle lug grooves 321 are disposed offset from each other with respect to the shoulder main groove 21 in the tire circumferential direction. Thus, the pass-by noise performance of the tire is improved.

Additionally, the groove depth H2 of the middle lug groove 321 (see FIG. 5) and the groove depth Hg of the shoulder main groove 21 preferably have a relationship of 0.15 ≤ H2/Hg ≤ 0.35, and more preferably, 0.20 ≤ H2/Hg ≤ 0.30. In such a configuration, since the middle lug grooves 321 are shallow grooves, the performance on snow of the tire during early stages of wear is improved, and the wear resistance performance of the tire after the intermediate stages of wear is ensured.

As illustrated in FIG. 3, the middle block 322 is defined by the adjacent middle lug grooves 321, 321. A maximum width Wb2 of the middle block 322 and the tire ground contact width TW (see FIG. 2) have a relationship of 0.10 ≤ Wb2/TW ≤ 0.20. Additionally, the maximum width Wb1 of the shoulder block 312 and the maximum width Wb2 of the middle block 322 have preferably a relationship of 1.00 ≤ Wb1/Wb2 ≤ 1.30 and more preferably a relationship of 1.10 ≤ Wb1/Wb2 ≤ 1.20. In addition, the maximum width Wb2 of the middle block 322 and a maximum width Wb3 of the center block 332 have preferably a relationship of 0.90 ≤ Wb2/Wb3 ≤ 1.10 and more preferably a relationship of 0.95 ≤ Wb2/Wb3 ≤ 1.05.

Additionally, in FIG. 4, a circumferential length Lb of the middle block 322 and the pitch length P2 of the middle lug grooves 321 (see FIG. 2) have a relationship of 0.98 ≤ Lb/P2 ≤ 1.08. In addition, the aspect ratio Lb/Wb2 of the middle block 322 is in a range of not less than 1.40 and not greater than 1.90. As a result, an aspect ratio Lb/Wb2 of the middle block 322 is made appropriate to suppress and heel and toe wear.

For example, in the configuration of FIG. 3, as described above, the shoulder main groove 21 and the center main groove 22 have a zigzag shape with an amplitude in the tire lateral direction. Additionally, the middle lug grooves 321 extend with a predetermined inclination angle θ2 with respect to the tire circumferential direction and open to the maximum amplitude position of the zigzag shape of the shoulder main groove 21 and the center main groove 22. The middle block 322 has left and right edge portions that protrude toward the shoulder main groove 21 and the center main groove 22. The middle block 322 has a shape widened at a center portion in the tire circumferential direction. In addition, the width of the middle block 322 gradually decreases from the maximum width position toward the front and back edge portions in the tire circumferential direction. As a result, the rigidity of the middle block 322 is increased.

Additionally, a distance Lb' in the tire circumferential direction from one end to the maximum width position of the middle block 322, and a circumferential length Lb of the middle block 322 preferably have a relationship of 0.35 ≤ Lb'/Lb ≤ 0.65. Additionally, a width length We of the edge portion on the side of the middle lug groove 321 of the middle block 322, and the maximum width Wb2 of the middle block 322 preferably have a relationship of 0.80 ≤ We/Wb2 ≤ 0.98.

As illustrated in FIG. 4, the middle block 322 has a zigzag-shaped edge portion extending along the middle lug groove 321. For example, in the configuration of FIG. 4, a wall surface of the middle lug groove 321 includes a notch portion having a uniform zigzag-shaped cross section in the groove depth direction, rather than a chamfered portion formed in only the edge portion. The maximum depth of the zigzag-shaped notch portion (not illustrated) is preferably in a range of 60% or greater of the groove depth H2 of the middle lug groove 321 (see FIG. 5). As a result, the edge component of the middle block 322 increases, thus improving the performance on snow.

For example, in the configuration of FIG. 4, the edge portion of the middle block 322 has a zigzag shape formed by alternately connecting the long portion and the short portion. In addition, the pitch length Pe of the zigzag shape and the width length We of the edge portion have a relationship of 0.13 ≤ Pe/We ≤ 0.33, and preferably a relationship of 0.18 ≤ Pe/We ≤ 0.28. Additionally, the amplitude Ae of the zigzag shape is in a range of 1.0 mm ≤ Ae ≤ 4.0 mm.

The narrow shallow grooves 323 extend in the tire lateral direction and pass through the middle block 322 and open to the left and right circumferential main grooves 21, 22 partitioning the middle land portion 32. Additionally, the narrow shallow grooves 323 differ from sipes that are closed when the tire contacts the ground in that the narrow shallow grooves 323 that are opened and serve as grooves when the tire contacts the ground. Also, the single narrow shallow groove 323 is disposed in each of the middle blocks 322. Additionally, the narrow shallow groove 323 partitions the middle block 322 into a pair of small blocks (reference sign is omitted in the drawings).

Additionally, the groove width Wn of the narrow shallow groove 323 is in a range of 1.2 mm ≤ Wn ≤ 3.0 mm. Additionally, the groove width Wn of the narrow shallow groove 323 and the groove width W2 of the middle lug groove 321 have a relationship of Wn/W2 ≤ 0.30, and the Wn is set sufficiently narrow.

In the configuration described above, since (1) the groove area ratio Sc of the tread portion center region is set to be within the range described above, and the middle block 322 has the narrow shallow groove 323 that is opened when the tire contacts the ground in place of a through sipe, the edge component of the tread portion center region is ensured. For this reason, as compared to the configuration in which the block has only the sipe (not illustrated), the performance on snow is improved. Additionally, since (2) the middle block 322 has the narrow shallow groove 323, as compared to the configuration in which the block has a wide or deep through groove, wear resistance of the tire is ensured.

For example, in the configuration of FIG. 4, the narrow shallow groove 323 has a straight shape and extends substantially parallel to the middle lug groove 321 and opens to the left-right maximum width position of the middle block 322. In addition, the narrow shallow groove 323 bisect the middle block 322, thereby forming the trapezoidal small blocks. As a result, the rigidity of the middle block 322 is maintained.

Additionally, in FIG. 5, the groove depth Hn of the narrow shallow groove 323 and the groove depth Hg of the shoulder main groove 21 have preferably a relationship of 0.05 ≤ Hn/Hg ≤ 0.25, and more preferably a relationship of 0.10 ≤ Hn/Hg ≤ 0.20. The narrow shallow groove 323 is shallower than the middle lug groove 321. Specifically, a difference between the groove depth H2 of the middle lug groove 321 and the groove depth Hn of the narrow shallow groove 323, and the groove depth Hg of the shoulder main groove 21 have preferably a relationship of 0.05 ≤ (H2-Hn)/Hg ≤ 0.25.

As illustrated in FIG. 4 and FIG. 5, the narrow shallow groove 323 has a groove bottom sipe 3231.

The groove bottom sipe 3231 is a cut formed in the bottom of the narrow shallow groove 323 and has a sipe width of less than 1.5 mm and a sipe depth of 2.0 mm or greater, and closes when the tire contacts the ground. Additionally, the groove bottom sipe 3231 extends along the narrow shallow groove 323, and passes through the middle land portion 32 in the tire lateral direction. Additionally, a depth Hbs of the groove bottom sipe 3231 and the groove depth Hg of the shoulder main groove 21 have preferably a range of 0.45 ≤ Hbs/Hg ≤ 0.65, and more preferably a range of 0.50 ≤ Hbs/Hg ≤ 0.60. The groove bottom sipe 3231 improves the performance on snow.

The sipe width is measured as the maximum opening width of the sipe in the tread contact surface, when the tire is mounted on a specified rim, inflated to the specified internal pressure, and in an unloaded state.

The sipe depth is measured as a distance from the tread contact surface to the maximum deep position of the sipe, when the tire is mounted on a specified rim, inflated to the specified internal pressure, and in an unloaded state.

As illustrated in FIG. 4 and FIG. 5, the middle block 322 includes a plurality of closed sipes 324.

The closed sipe 324 is a cut formed in the contact surface of the middle block 322 and has a sipe width of less than 1.5 mm and a sipe depth of 2.0 mm or greater, and closes when the tire contacts the ground. Additionally, the closed sipe 324 has a closed structure in which both end portions are provided in the middle block 322. The extension length Ws of the closed sipe 324 in the tire lateral direction and the maximum width Wb2 of the middle block 322 have a relationship of 0.50 ≤ Ws/Wb2 ≤ 0.80. Additionally, in FIG. 5, the depth Hs of the closed sipe 324 and the groove depth Hg of the shoulder main groove 21 have preferably a relationship of 0.45 ≤ Hs/Hg ≤ 0.65, and more preferably a relationship of 0.50 ≤ Hs/Hg ≤ 0.60.

For example, in the configuration of FIG. 4, the single closed sipe 324 is formed in each of the pair of small blocks defined by the narrow shallow groove 323. However, no such limitation is intended, and the plurality of closed sipes 324 may be formed in one small block (not illustrated). Additionally, in the configuration of FIG. 4, the closed sipe 324 has a Z-shape. However, no such limitation is intended, and the closed sipe 324 may have a W-shape or a linear shape (not illustrated). Additionally, in the configuration of FIG. 5, the closed sipe 324 have bottom upper portion (reference sign is omitted in the drawings) at left and right ends, thereby suppressing the occurrence of cracks originating from the ends of the sipe.

### Effects

As described above, the pneumatic tire 1 includes the pair of shoulder main grooves 21, 21 and the two or more center main grooves 22, 22, and the pair of shoulder land portions 31, 31, the pair of middle land portions 32, 32, and one or more rows of center land portions 33, which are defined by the main grooves 21, 22 (see FIG. 2). Additionally, the groove area ratio Sc of the tread portion center region is in a range of 0.40 ≤ Sc ≤ 0.50. The middle land portion 32 includes the plurality of middle lug grooves 321 that extend in the tire lateral direction and pass through the middle land portion 32, and the plurality of middle blocks 322 defined by the middle lug portions 321. The middle block 322 has the narrow shallow groove 323 that extends in the tire lateral direction and passes through the middle block 322, and the pair of small blocks (reference sign is omitted in the drawings) defined by the narrow shallow groove 323.

In such a configuration, since (1) the groove area ratio Sc of the tread portion center region is set to be within the range described above, and the middle block 322 has the narrow shallow groove 323 that is opened when the tire contacts the ground in place of a through sipe, the edge component of the tread portion center region is ensured. For this reason, as compared to the configuration in which the block has only the sipe (not illustrated), the performance on snow is advantageously improved. Additionally, since (2) the middle block 322 has the narrow shallow groove 323, as compared to the configuration in which the block has a wide or deep through groove, wear resistance of the tire is advantageously ensured.

Additionally, in the pneumatic tire 1, the groove area ratio Sa of the tire ground contact region is in a range of 0.25 ≤ Sa ≤ 0.40, and the groove area ratio Sc of the tread portion center region and a groove area ratio Ss of the tread portion shoulder region have a relationship of 3.0 ≤ Sc/Ss (see FIG. 2). As a result, the groove area ratios Sa, Sc, and Ss of the tire ground contact region are made appropriate.

Additionally, in the pneumatic tire 1, the groove area ratio Ss of the tread portion shoulder region is in a range of 0.05 ≤ Ss ≤ 0.15. See FIG. 2. As a result, there is an advantage that the rigidity of the shoulder land portion 31 is ensured, thus improving cut resistance of the tire.

Additionally, in the pneumatic tire 1, the groove width Wn of the narrow shallow groove 323 (see FIG. 4) is in a range of 1.2 mm ≤ Wn ≤ 3.0 mm, and the groove depth Hn of the narrow shallow groove (see FIG. 5) and the groove depth Hg of the shoulder main groove 21 are in a range of 0.05 ≤ Hn/Hg ≤ 0.25. As a result, there is an advantage that the narrow shallow grooves 323 appropriately open when the tire contacts the ground, and the function of the narrow shallow grooves 323 as grooves is properly ensured.

Additionally, in the pneumatic tire 1, the groove depth H2 of the middle lug groove 321 (see FIG. 5) and the groove depth Hg of the shoulder main groove 21 have a relationship of 0.15 ≤ H2/Hg ≤ 0.35. Thereby, the groove depth H2 of the middle lug groove 321 is advantageously made appropriate.

Additionally, in the pneumatic tire 1, the groove width Wn of the narrow shallow groove 323 and the groove width W2 of the middle lug groove 321 have a relationship of Wn/W2 ≤ 0.30. As a result, the groove width Wn of the narrow shallow groove 323 is set to be sufficiently narrow, advantageously ensuring wear resistance of the middle block 322.

Additionally, in the pneumatic tire 1, the difference between the groove depth H2 of the middle lug groove 321 (see FIG. 5) and the groove depth Hn of the narrow shallow groove 323, and the groove depth Hg of the shoulder main groove 21 have a relationship of 0.05 ≤ (H2-Hn)/Hg ≤ 0.25. Thereby, the groove depth Hn of the narrow shallow groove 323 is advantageously made appropriate.

Additionally, in the pneumatic tire 1, the aspect ratio Lb/Wb2 of the middle block 322 (see FIG. 4) is in a range of not less than 1.40 and not greater than 1.90. As a result, the aspect ratio Lb/Wb2 of the middle block 322 is made advantageously appropriate to suppress heel and toe wear.

Additionally, in the pneumatic tire 1, the middle block 322 has a shape widened at the center portion in the tire circumferential direction (see FIG. 4). As a result, the shape of the middle block 322 is advantageously made appropriate.

In the pneumatic tire 1, the middle block 322 has a zigzag-shaped edge portion that extends along the middle lug groove 321 (see FIG. 4). This advantageously increases the edge component of the middle blocks 322, thus improving the performance on snow of the tire.

In the pneumatic tire 1, the pitch length Pe of the zigzag shape and the width length We of the edge portion have a relationship of 0.13 ≤ Pe/We ≤ 0.33, and the amplitude Ae of the zigzag shape is in a range of 1.0 mm ≤ Ae ≤ 4.0 mm (see FIG. 4).

Additionally, in the pneumatic tire 1, the small block (reference sign is omitted in the drawings) includes at least one closed sipe 324 (see FIG. 4). The extension length Ws of the closed sipe 324 in the tire lateral direction and the maximum width Wb2 of the middle block 322 have a relationship of 0.50 ≤ Ws/Wb2 ≤ 0.80. The extension length Ws of the closed sipes 324 is advantageously made appropriate.

Additionally, in the pneumatic tire 1, the narrow shallow groove 323 has the groove bottom sipe 3231 (see FIG. 4 and FIG. 5). This configuration advantageously improves the performance on snow of the tire.

In the pneumatic tire 1, the shoulder land portion 31 has the plurality of shoulder lug grooves 311 passing through the shoulder land portion 31 in the tire lateral direction (see FIG. 2). The groove depth H1 (not illustrated) of the shoulder lug groove 311 and the groove depth Hg of the shoulder main groove 21 have a relationship of 0.15 ≤ H1/Hg ≤ 0.35. As a result, the groove depth H1 of the shoulder lug groove 311 is made appropriate, advantageously ensuring both the performance on snow and cut resistance of the tire.

### Target of Application

In addition, the pneumatic tire 1 includes an indicator (not illustrated) indicating that the pneumatic tire is a trailer tire. The indicator is constituted of, for example, a mark or irregularities formed on the sidewall portion of the tire. For example, ECR54 (Article 54 of the Commission on Economic Commission Regulation) requires the provision of the indicator indicating a trailer application.

In addition, the pneumatic tire 1 is preferably an all-season tire having a Mud and Snow mark "M + S" and also a Three Peak Mountain Snow Flake mark "3PMSF". These marks are stamped, for example, in the tire sidewall. In such an all-season tire, a predetermined snow performance is required when the tire is new.

### Example

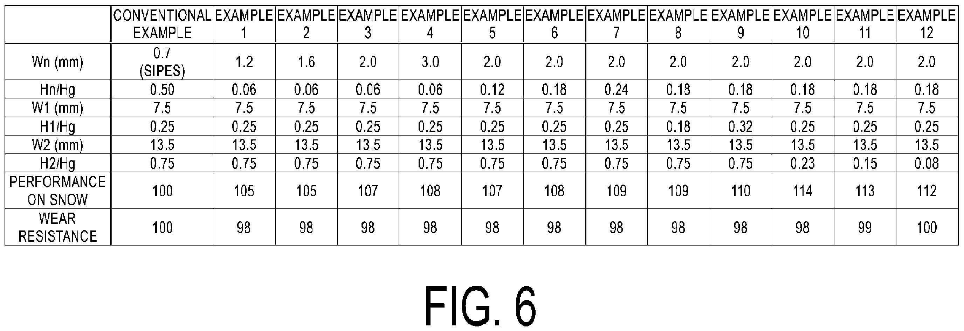

FIG. 6 is a table showing results of performance tests of pneumatic tires according to the embodiment of the present invention.

In the performance tests, (1) performance on snow and (2) wear resistance performance were evaluated for several types of test tires. Test tires having a tire size of 385/65R22.5 each were mounted on a rim having a rim size of 22.5 X 11.75, inflated to an inner pressure of 900 kPa, and loaded with a specified load specified by JATMA.
(1) The evaluation of the performance on snow was performed in accordance with Regulation No. 117 Revision 2 (R117-02) of Economic Commission for Europe (ECE), the distance required for acceleration from the prescribed initial speed to the termination speed was measured, and acceleration was calculated for evaluation. In this evaluation, larger values are preferable.
(2) In the evaluation for the wear resistance, the test tires were mounted on all wheels of trailer axles of a tractor-trailer. Then, after driving on the paved road for 30,000 km, the degree of wear was observed, and an index evaluation was performed with the Conventional Example being defined as the reference (100). In this evaluation, larger values are preferable. When the value was 98 or larger, it was deemed that the performance was properly ensured.

The test tires in Examples had the configuration illustrated in FIG. 1 and FIG. 2. Additionally, the groove depth of the shoulder main grooves 21 and the center main grooves 22 was 15.5 mm, and the groove width was 17.0 mm. The distance Dg1 of the shoulder main groove 21 from the tire equatorial plane CL was 30% of the tire ground contact width TW, and the distance Dg2 of the center main groove 22 was 10% of the tire ground contact width TW. In addition, the aspect ratio of the middle blocks 322 and the center blocks 332 was 1.60.

A test tire in Conventional Example were provided with open sipes passing through the blocks, instead of the narrow shallow grooves 323, 333 of the middle blocks 322 and the center blocks 332 in the test tire in Example 1.

As can be seen from the test results, the tire in Examples exhibited both the performance on snow and the wear resistance.

### Reference Signs List

1: Pneumatic tire
11: Bead core
12: Bead filler
121: Lower filler
122: Upper filler
13: Carcass layer
14: Belt layer
141: Large-angle belt
142, 143: Cross belt
144: Belt cover
15: Tread rubber
16: Sidewall rubber
17: Rim cushion rubber
21: Shoulder main groove
22: Center main groove
31: Shoulder land portion
311: Shoulder lug groove
312: Shoulder block
32: Middle land portion
321: Middle lug groove
322: Middle block
323: Narrow shallow groove
3231: Groove bottom sipe
324: Closed sipe
33: Center land portion
331: Center lug groove
332: Center block
333: Narrow shallow groove
334: Closed sipe

## Claims

1. A pneumatic tire (1) comprising:
a pair of shoulder main grooves (21) and two or more center main grooves (22); and a pair of shoulder land portions (31), a pair of middle land portions (32), and one or more rows of center land portions (33), which are defined by the main grooves (21, 22), wherein a tread portion center region is a region between the groove center lines of the shoulder main grooves (21), and wherein
a groove area ratio Sc of the tread portion center region defined as the ratio of the groove area of the tread portion center region to the area of the tread portion center region is in a range of 0.40 ≤ Sc ≤ 0.50,
the middle land portion (32) includes a plurality of middle lug grooves (321) extending in a tire lateral direction and passing through the middle land portion (32), and a plurality of middle blocks (322) defined by the middle lug grooves (321), and
the middle block (322) has a narrow shallow groove (323) extending in the tire lateral direction and passing through the middle block (322), and a pair of small blocks defined by the narrow shallow groove (323), and
the middle block (322) has a zigzag-shaped edge portion extending along the middle lug groove (321),
**characterized in that**
a pitch length Pe of the zigzag shape and a width length We of the edge portion have a relationship of 0.13 ≤ Pe/We ≤ 0.33, and an amplitude Ae of the zigzag shape is in a range of 1.0 mm ≤ Ae ≤ 4.0 mm.

2. The pneumatic tire according to claim 1, wherein
a groove width Wn of the narrow shallow groove (323) is in a range of 1.2 mm ≤ Wn ≤ 3.0 mm, and
a groove depth Hn of the narrow shallow groove (323) and a groove depth Hg of the shoulder main groove (21) are in a range of 0.05 ≤ Hn/Hg ≤ 0.25.

3. The pneumatic tire according to claim 1 or 2, wherein
a groove depth H2 of the middle lug groove (321) and the groove depth Hg of the shoulder main groove (21) have a relationship of 0.15 ≤ H2/Hg ≤ 0.35.

4. The pneumatic tire according to any one of claims 1 to 3, wherein
the groove width Wn of the narrow shallow groove (323) and a groove width W2 of the middle lug groove (321) have a relationship of Wn/W2 ≤ 0.30.

5. The pneumatic tire according to any one of claims 1 to 4, wherein
a difference between the groove depth H2 of the middle lug groove (321) and the groove depth Hn of the narrow shallow groove (323), and the groove depth Hg of the shoulder main groove (21) have a relationship of 0.05 ≤ (H2 - Hn)/Hg ≤ 0.25.

6. The pneumatic tire according to any one of claims 1 to 5, wherein
an aspect ratio of the middle block (322) defined as the ratio of the maximum length (Lb) of the block in the tire circumferential direction and the maximum width (Wb2) of the block in the tire lateral direction is in a range of not less than 1.40 and not greater than 1.90.

7. The pneumatic tire according to any one of claims 1 to 6, wherein
the middle block (322) has a shape widened at a center portion in a tire circumferential direction.

8. The pneumatic tire according to any one of claims 1 to 7, wherein
the small block includes at least one closed sipe (324), and
an extension length Ws of the closed sipe in the tire lateral direction and a maximum width Wb2 of the middle block have a relationship of 0.50 ≤ Ws/Wb2 ≤ 0.80.

9. The pneumatic tire according to any one of claims 1 to 8, wherein
the narrow shallow groove (323) has a groove bottom sipe (3231).

10. The pneumatic tire according to any one of claims 1 to 9, wherein
the shoulder land portion (31) includes a plurality of shoulder lug grooves (311) passing through the shoulder land portion in the tire lateral direction, and
a groove depth H1 of the shoulder lug groove and the groove depth Hg of the shoulder main groove (21) have a relationship of 0.15 ≤ H1/Hg ≤ 0.35.

11. The pneumatic tire according to any one of claims 1 to 10, further comprising
an indicator indicating that the pneumatic tire (1) is a trailer tire.

## Patentansprüche

1. Luftreifen (1), umfassend:
ein Paar Schulterhauptrillen (21) und zwei oder mehrere Mittelhauptrillen (22); und ein Paar Schulterstegabschnitte (31), ein Paar mittlere Stegabschnitte (32) und eine oder mehrere Reihen zentraler Stegabschnitte (33), die durch die Hauptrillen (21, 22) definiert sind, wobei ein Laufflächenabschnitt-Mittelbereich ein Bereich zwischen den Rillenmittellinien der Schulterhauptrillen (21) ist, und wobei
ein Rillenflächenverhältnis Sc des Laufflächenabschnitt-Mittelbereichs, das als das Verhältnis von Rillenfläche des Laufflächenabschnitt-Mittelbereichs zur Fläche des Laufflächenabschnitt-Mittelbereichs definiert ist, in einem Bereich von 0,40 ≤ Sc ≤ 0,50 liegt,
der mittlere Stegabschnitt (32) eine Mehrzahl von mittleren Stollenrillen (321) einschließt, die sich in Reifenquerrichtung erstrecken und durch den mittleren Stegabschnitt (32) verlaufen, und eine Mehrzahl von mittleren Blöcken (322), die durch die mittleren Stollenrillen (321) definiert sind, und
der mittlere Block (322) eine schmale flache Rille (323) aufweist, die sich in Reifenquerrichtung erstreckt und durch den mittleren Block (322) hindurchgeht, und ein Paar von kleinen Blöcken, die durch die schmale flache Rille (323) definiert sind, und
der mittlere Block (322) einen zickzackförmigen Randabschnitt aufweist, der sich entlang der mittleren Stollenrille (321) erstreckt,
**dadurch gekennzeichnet, dass**
eine Teilungslänge Pe der Zickzackform und eine Breitenlänge We des Randabschnitts ein Verhältnis von 0,13 ≤ Pe/We ≤ 0,33 aufweisen und eine Amplitude Ae der Zickzackform in einem Bereich von 1,0 mm ≤ Ae ≤ 4,0 mm liegt.

2. Luftreifen gemäß Anspruch 1, wobei
eine Rillenbreite Wn der schmalen, flachen Rille (323) in einem Bereich von 1,2 mm ≤ Wn ≤ 3,0 mm liegt, und
eine Rillentiefe Hn der schmalen flachen Rille (323) und eine Rillentiefe Hg der Schulterhauptrille (21) in einem Bereich von 0,05 ≤ Hn/Hg ≤ 0,25 liegen.

3. Luftreifen gemäß Anspruch 1 oder 2, wobei
eine Rillentiefe H2 der mittleren Stollenrille (321) und die Rillentiefe Hg der Schulterhauptrille (21) ein Verhältnis von 0,15 ≤ H2/Hg ≤ 0,35 aufweisen.

4. Luftreifen gemäß einem der Ansprüche 1 bis 3, wobei
die Rillenbreite Wn der schmalen flachen Rille (323) und eine Rillenbreite W2 der mittleren Stollenrille (321) ein Verhältnis von Wn/W2 ≤ 0,30 aufweisen.

5. Luftreifen gemäß einem der Ansprüche 1 bis 4, wobei
eine Differenz zwischen der Rillentiefe H2 der mittleren Stollenrille (321) und der Rillentiefe Hn der schmalen flachen Rille (323) sowie die Rillentiefe Hg der Schulterhauptrille (21) ein Verhältnis von 0,05 ≤ (H2 - Hn)/Hg ≤ 0,25 aufweisen.

6. Luftreifen gemäß einem der Ansprüche 1 bis 5, wobei
ein Formfaktor des mittleren Blocks (322), das als das Verhältnis der maximalen Länge (Lb) des Blocks in Reifenumfangsrichtung und der maximalen Breite (Wb2) des Blocks in Reifenquerrichtung definiert ist, in einem Bereich von nicht weniger als 1,40 und nicht mehr als 1,90 liegt.

7. Luftreifen gemäß einem der Ansprüche 1 bis 6, wobei
der mittlere Block (322) eine Form aufweist, die in einem zentralen Abschnitt in Reifenumfangsrichtung erweitert ist.

8. Luftreifen gemäß einem der Ansprüche 1 bis 7, wobei
der kleine Block mindestens eine geschlossene Lamelle (324) einschließt, und
eine Erstreckungslänge Ws der geschlossenen Lamelle in Reifenquerrichtung und eine maximale Breite Wb2 des mittleren Blocks ein Verhältnis von 0,50 ≤ Ws/Wb2 ≤ 0,80 aufweisen.

9. Luftreifen gemäß einem der Ansprüche 1 bis 8, wobei die schmale, flache Rille (323) eine Rillenbodenlamelle (3231) aufweist.

10. Luftreifen gemäß einem der Ansprüche 1 bis 9, wobei
der Schulterstegabschnitt (31) eine Mehrzahl von Schulterstollenrillen (311) einschließt, die durch den Schulterstegabschnitt in Reifenquerrichtung verlaufen, und
eine Rillentiefe H1 der Schulterstollenrille und die Rillentiefe Hg der Schulterhauptrille (21) ein Verhältnis von 0,15 ≤ H1/Hg ≤ 0,35 aufweisen.

11. Luftreifen gemäß einem der Ansprüche 1 bis 10, ferner umfassend
einen Indikator, der angibt, dass der Luftreifen (1) ein Anhänger-Reifen ist.

## Revendications

1. Pneumatique (1) comprenant :
une paire de rainures principales d'épaulement (21) et deux rainures centrales principales (22) ou plus ; et une paire de parties de méplat d'épaulement (31), une paire de parties de méplat médianes (32), et une ou plusieurs rangées de parties de méplat centrales (33), qui sont définies par les rainures principales (21, 22), dans lequel une région centrale de partie de bande de roulement est une région entre les lignes centrales de rainure des rainures principales d'épaulement (21), et dans lequel
un rapport d'aire de rainure Sc de la région centrale de partie de bande de roulement défini comme le rapport de l'aire de rainure de la région centrale de partie de bande de roulement à l'aire de la région centrale de partie de bande de roulement est dans une plage de 0,40 ≤ Sc ≤ 0,50,
la partie de méplat médiane (32) inclut une pluralité de rainures de barrette médianes (321) s'étendant dans une direction latérale de pneu et passant à travers la partie de méplat médiane (32), et une pluralité de blocs médians (322) définis par les rainures de barrette médianes (321), et
le bloc médian (322) a une rainure superficielle étroite (323) s'étendant dans la direction latérale de pneu et passant à travers le bloc médian (322), et une paire de petits blocs définis par la rainure superficielle étroite (323), et
le bloc médian (322) a une partie de bord en forme de zigzag s'étendant le long de la rainure de barrette médiane (321),
**caractérisé en ce que**
une longueur de pas Pe de la forme en zigzag et une longueur en largeur We de la partie de bord ont une relation de 0,13 ≤ Pe/We ≤ 0,33, et une amplitude Ae de la forme en zigzag est dans une plage de 1,0 mm ≤ Ae ≤ 4,0 mm.

2. Pneumatique selon la revendication 1, dans lequel
une largeur de rainure Wn de la rainure superficielle étroite (323) est dans une plage de 1,2 mm ≤ Wn ≤ 3,0 mm, et
une profondeur de rainure Hn de la rainure superficielle étroite (323) et une profondeur de rainure Hg de la rainure principale d'épaulement (21) sont dans une plage de 0,05 ≤ Hn/Hg ≤ 0,25.

3. Pneumatique selon la revendication 1 ou 2, dans lequel
une profondeur de rainure H2 de la rainure de barrette médiane (321) et la profondeur de rainure Hg de la rainure principale d'épaulement (21) ont une relation de 0,15 ≤ H2/Hg ≤ 0,35.

4. Pneumatique selon l'une quelconque des revendications 1 à 3, dans lequel
la largeur de rainure Wn de la rainure superficielle étroite (323) et une largeur de rainure W2 de la rainure de barrette médiane (321) ont une relation de Wn/W2 ≤ 0,30.

5. Pneumatique selon l'une quelconque des revendications 1 à 4, dans lequel
une différence entre la profondeur de rainure H2 de la rainure de barrette médiane (321) et la profondeur de rainure Hn de la rainure superficielle étroite (323), et la profondeur de rainure Hg de la rainure principale d'épaulement (21) ont une relation de 0,05 ≤ (H2 - Hn)/Hg ≤ 0,25.

6. Pneumatique selon l'une quelconque des revendications 1 à 5, dans lequel
un rapport d'aspect du bloc médian (322) défini comme le rapport de la longueur maximale (Lb) du bloc dans la direction circonférentielle de pneu et de la largeur maximale (Wb2) du bloc dans la direction latérale de pneu est dans une plage pas inférieure à 1,40 et pas supérieure à 1,90.

7. Pneumatique selon l'une quelconque des revendications 1 à 6, dans lequel
le bloc médian (322) a une forme élargie au niveau d'une partie centrale dans une direction circonférentielle de pneu.

8. Pneumatique selon l'une quelconque des revendications 1 à 7, dans lequel
le petit bloc inclut au moins une lamelle fermée (324), et
une longueur d'extension Ws de la lamelle fermée dans la direction latérale de pneu et une largeur maximale Wb2 du bloc médian ont une relation de 0,50 ≤ Ws/Wb2 ≤ 0,80.

9. Pneumatique selon l'une quelconque des revendications 1 à 8, dans lequel
la rainure superficielle étroite (323) a une lamelle inférieure de rainure (3231).

10. Pneumatique selon l'une quelconque des revendications 1 à 9, dans lequel
la partie de méplat d'épaulement (31) inclut une pluralité de rainures de barrette d'épaulement (311) passant à travers la partie de méplat d'épaulement dans la direction latérale de pneu, et
une profondeur de rainure H1 de la rainure de barrette d'épaulement et la profondeur de rainure Hg de la rainure principale d'épaulement (21) ont une relation de 0,15 ≤ H1/Hg ≤ 0,35.

11. Pneumatique selon l'une quelconque des revendications 1 à 10, comprenant en outre
un indicateur indiquant que le pneumatique (1) est un pneu de remorque.
